# FASCICULE DE BREVET EUROPEEN

(11) **EP 2 192 501 B1**
(45) Date de publication et mention de la délivrance du brevet: **28.10.2015**
(21) Numéro de dépôt: 09176242.7
(22) Date de dépôt: 17.11.2009
(51) Int. Cl.: G06F 17/30, H04N 5/76

(54) **Procédé d'acquisition de données et procédé de construction d'un produit multimédia de visite virtuelle**
Verfahren zur Datenerfassung und Verfahren zur Herstellung eines Multimedia-Produkt zur virtuellen Besichtigung
Method for the data acquisition and method of providing a multimedia product for virtual visit

(30) Priorité: 01.12.2008 FR 0858179
(43) Date de publication de la demande: 02.06.2010
(73) Titulaire: Trusgnach, Mathieu, 57330 Zoufftgen (FR); Finot, Jérôme, 57330 Hettange-Grande (FR)
(72) Inventeur: Trusgnach, Mathieu, 57330 Zoufftgen (FR); Finot, Jérôme, 57330 Hettange-Grande (FR)
(74) Mandataire: Novagraaf Technologies

(56) Documents cités:
- US-A1- 2003 137 449
- US-A1- 2004 218 895
- US-A1- 2008 285 886
- SMITH B. K. et al.: "Inquiry with imagery: historical archive retrieval with digital cameras" International Multimedia Conference Proceedings of the seventh ACM international conference on Multimedia (Part 1) 1999, pages 405-408, XP002537400 ISBN: 1-58113-151-8 Extrait de l'Internet: URL:http://delivery.acm.org/10.1145/320000 /319675/p405-smith.pdf?key1=319675&key2=05 31477421&coll=GUIDE&dl=GUIDE&CFID=44421376 &CFTOKEN=37684652> [extrait le 2009-07-16]

## Description

L'invention concerne un procédé d'acquisition de données et un procédé de construction d'un produit multimédia de visite virtuelle à partir des données acquises. Elle concerne également un appareil pour l'acquisition des données selon le procédé d'acquisition.

Il a déjà été proposé des services sur Internet pour visiter virtuellement des lieux. De tels services permettent à des utilisateurs d'Internet d'avoir des images des lieux proposés à la visite. L'utilisateur peut choisir de manière interactive un point de vue et obtenir les images correspondant à ce point de vue. On trouve en particulier des applications de ces visites virtuelles dans le domaine de l'immobilier, pour la présentation d'un appartement ou d'une maison à vendre ou à louer.

Le document US 2005/187832 montre par exemple un système de visualisation de visites virtuelles permettant d'afficher sur l'écran d'un utilisateur distant une fenêtre partagée en différentes zones, dont l'une est prévue pour l'affichage d'une partie d'image panoramique. L'interface avec l'utilisateur permet de modifier la partie d'image visualisée de l'image panoramique. Le document US 7,080,096 montre une approche similaire pour un système d'aide à la vente de biens immobiliers.

La société Easypano commercialise un logiciel nommé « Tourweaver » qui permet de construire et de visualiser une visite virtuelle sous la forme d'un produit multimédia utilisant la technologie « Flash » (marque déposée) ou « Java ». Une image en plan d'un lieu est insérée dans le logiciel et des liens hypermédia correspondant à des stations de prises de vue y sont disposés par un opérateur. Les stations de prises de vue sont associées à des images panoramiques qui sont également insérées dans le produit multimédia. L'utilisateur peut alors visualiser le produit multimédia en affichant les images panoramiques et en passant d'une vue à l'autre en sélectionnant l'un des liens hypermédia sur une vue de l'image en plan.

Les images panoramiques que peuvent contenir et présenter les systèmes précédents peuvent provenir de différentes techniques d'acquisition.

Le document FR 2 821 167 montre un appareil de prise de vue utilisant des lentilles optiques dites grand angle, ou « fish eye », et qui permet de reconstituer un panorama à partir de deux prises de vues selon des sens opposés et après traitement de ces images. L'appareil permet en outre d'insérer sur l'image un repère d'orientation en photographiant l'aiguille d'une boussole.

Le document US 2003/030636 propose un appareil permettant de prendre une succession de vues en balayant complètement un panorama. Les différentes images sont ensuite assemblées à l'aide d'un logiciel spécifique pour reconstituer une image panoramique unique.

Le document US 2004/0218895 A1 montre un appareil permettant l'acquisition de données multiples relatives au lieu d'une prise de vue. Ces données peuvent ensuite être exploitées dans un produit multimédia.

La construction d'un produit multimédia est longue et fastidieuse. En effet, elle nécessite de nombreuses opérations manuelles de désignation des vues, de construction de la vue en plan, et du positionnement des liens hypermédia sur cette vue.

L'invention vise à fournir un procédé de construction d'un produit multimédia de visite virtuelle qui soit le plus simple possible d'utilisation en minimisant le nombre d'interventions manuelles.

Avec ces objectifs en vue, l'invention a pour objet un procédé d'acquisition de données en vue de la construction d'un produit multimédia de visite virtuelle, le produit multimédia comportant un parcours entre des stations, le parcours permettant de naviguer dans l'ensemble des stations lors de l'utilisation du produit multimédia. Selon le procédé, avec un appareil de prise de vue, on fait l'acquisition de données concernant des lieux dans au moins deux stations différentes de prise de vue, les données de chaque station comprenant au moins une image des lieux, un repère d'orientation lié à l'image et au moins un repère parmi un repère de liaison ou un repère de provenance en lien avec l'une des autres stations, le repère de liaison ou de provenance étant des données de direction destinées à construire le parcours du produit multimédia.

Un repère de liaison indique qu'une prochaine station se situe dans la direction indiquée, tandis qu'un repère de provenance indique la direction d'un passage depuis la station dont les données ont été acquises précédemment. Ainsi, grâce à l'invention, on dispose d'informations permettant de construire un réseau de liens entre chaque station de prise de vue, avec une orientation de ces liens permettant un positionnement spatial relatif des stations. L'opérateur qui construit le produit multimédia n'a plus besoin d'intervenir pour spécifier les liens entre les stations, cette opération peut être automatisée, et donc la construction du produit multimédia s'en trouve simplifiée.

De manière particulière, après l'acquisition des données d'une station, l'appareil détermine et désigne une prochaine station en lien avec l'un des repères de liaison déjà acquis et enregistre un lien entre ledit repère de liaison et ladite prochaine station. En suivant un ordre de parcours des différentes stations, l'opérateur n'a pas besoin de spécifier quelle est la prochaine station où il placera l'appareil de prise de données. En ayant désigné au préalable un repère de liaison, l'appareil sait qu'une station est prévue en lien avec ce repère, et que les données de cette station n'ont pas été acquises.

Selon une autre disposition, l'acquisition des données d'une station, hormis une première station, comporte une étape d'acquisition du repère de provenance pour désigner l'une des stations précédentes dont les données ont été acquises précédemment. L'acquisition du repère de provenance permet de compléter les données concernant le lien entre la station actuelle et la station de provenance. La première station est celle dont les données ont été acquises en premier. Pour celle-ci, il ne peut y avoir de provenance, puisque c'est le point de départ.

Selon un perfectionnement, l'acquisition du repère de provenance comporte en outre l'acquisition d'un angle de station indiquant la direction vers la station précédente. Cette donnée supplémentaire permet de reconstruire avec plus de réalisme un plan de situation des stations entre elles, par une triangulation entre un point de passage et deux stations successives.

Selon un autre perfectionnement, l'acquisition des repères de liaison comporte en outre l'acquisition d'une donnée de qualification du repère de liaison parmi une porte, pour désigner un passage entre deux pièces, une salle, pour désigner une autre station dans une même pièce, un escalier montant, pour désigner un passage vers un niveau supérieur, un escalier descendant pour désigner un passage vers un niveau inférieur, ou un retour pour désigner une station de laquelle les données ont déjà été acquises. Ces informations permettent d'appliquer des méthodes spécifiques par la suite pour la construction d'une représentation du réseau de liens. Par exemple, si une porte est indiquée, une représentation de mur pourra être insérée entre les deux stations, contrairement à l'indication d'une salle. Un escalier pourra être interprété pour subdiviser la visite en deux niveaux ou plus. L'indication d'un retour est interprété directement pendant le procédé de prise de vue pour signifier qu'un lien doit être établi entre deux stations dont les données ont déjà été acquises.

Selon un autre perfectionnement, le procédé comporte en outre l'acquisition de repères de coin pour désigner l'orientation de coins d'une pièce. Ces données pourront ensuite être utilisées pour représenter également les formes des pièces des lieux visités.

Eventuellement, pour chaque repère de coin, on acquiert en outre une mesure de distance entre l'appareil et le coin. Ces données permettent une reconstruction en plan de la pièce plus précise, par l'application de règles trigonométriques connues.

L'invention a aussi pour objet un procédé de construction d'un produit multimédia de visite virtuelle, selon lequel on acquiert des données selon le procédé d'acquisition tel que décrit précédemment, on réalise automatiquement le produit multimédia en y intégrant les images acquises et en construisant un parcours entre les stations en fonction des repères de liaison et des repères de provenance acquis, le parcours permettant de naviguer dans l'ensemble des images lors de l'utilisation du produit multimédia.

Le parcours est un ensemble de liens indiquant que le passage entre deux stations reliées par un lien est possible. Ceci se traduit par un mode de rendu des images dans lequel on passe d'une image à l'autre selon les passages possibles tels que définis par les liens. Comme ces données sont suffisantes, la construction du produit multimédia peut être automatique.

Selon un perfectionnement, pour chaque repère de liaison ou repère de provenance, on place une zone de lien hypermédia sur l'image, centrée sur l'endroit désigné par le repère de liaison ou le repère de provenance. Les données d'orientation de l'image et des repères permettent de localiser, au moins sur un axe, des endroits sur l'image correspondant à un endroit désigné par les repères et d'y placer une zone de lien hypermédia. Lors de l'utilisation du produit multimédia, l'utilisateur pourra choisir ce lien, par exemple par une sélection avec une souris d'ordinateur, de manière à provoquer l'affichage de l'image prise de la station désignée par le repère associé au lien hypermédia.

De manière particulière, le procédé comprend une étape de construction d'une image du parcours, l'image comportant des symboles représentant les stations et des traits représentant les liens entre les stations, les traits étant orientés, au départ du symbole, en fonction de l'orientation du repère de liaison ou du repère de provenance correspondant. Cette image pourra être affichée par le produit multimédia pour servir d'aide à l'utilisation pour se représenter la configuration des lieux. Elle pourra également être utilisée pour y placer des zones de lien hypermédia pour accéder directement à la station du choix de l'utilisateur. On peut également y représenter en direct une flèche ou un cône de vue par exemple désignant la direction dans laquelle l'image est visualisée.

L'invention a aussi pour objet un appareil de prise de vue comportant des moyens d'acquisition d'au moins deux images et des moyens d'orientation pour fournir un repère d'orientation pour chaque image, **caractérisé en ce qu**'il comporte en outre des moyens de chaînage pour enregistrer des repères de liaison ou des repères de provenance entre les images.

De manière particulière, les moyens de chaînage comportent un viseur monté mobile et apte à être orienté dans une direction, et un moyen de sélection pour enregistrer de manière sélective un repère de liaison ou un repère de provenance désigné par l'orientation du viseur.

Selon une disposition constructive, les moyens d'orientation sont une boussole. La même orientation est ainsi reprise pour chaque station.

Selon un perfectionnement, l'appareil comporte des moyens de désignation pour indiquer la prochaine station où des données sont à acquérir. Ces moyens peuvent être actionnés par l'appareil pour orienter un indicateur dans la direction de la prochaine station, ou un signal sonore, visuel ou vibrant émis lorsque qu'un indicateur manipulé par l'utilisateur de l'appareil est en correspondance avec la direction à indiquer. Ce peut être aussi une représentation sur un écran, en utilisant par exemple une image acquise sur laquelle une indication de la direction est incrustée.

L'invention sera mieux comprise et d'autres particularités et avantages apparaîtront à la lecture de la description qui va suivre, la description faisant référence aux dessins annexés parmi lesquels :
- la figure 1 est une représentation schématique d'un système de construction et de rendu de visites virtuelles ;
- la figure 2 est un schéma d'un appareil de prise de vue conforme à l'invention ;
- les figures 3 à 6 sont des représentations schématiques selon différentes variantes d'appareils photographiques pouvant être intégrés à l'appareil de prise de vue de la figure 2 ;
- la figure 7 est un organigramme représentant les étapes d'utilisation de l'appareil de prise de vue ;
- la figure 8 est un organigramme représentant les étapes d'acquisition de données par l'appareil de prise de vue ;
- les figures 9 à 15 détaillent un exemple de procédé d'acquisition pour une visite virtuelle ;
- la figure 16 est une vue schématique d'une étape de construction d'une représentation en plan de la visite ;
- les figures 17 et 18 sont des variantes de représentation de lien entre des stations de prises de vue ;
- les figures 19 à 21 sont des vues de variantes de représentation d'un parcours de visite en plan ;
- la figure 22 est une vue panoramique sur laquelle sont placés des repères ;
- la figure 23 est une représentation d'un écran du produit multimédia fourni par l'invention.

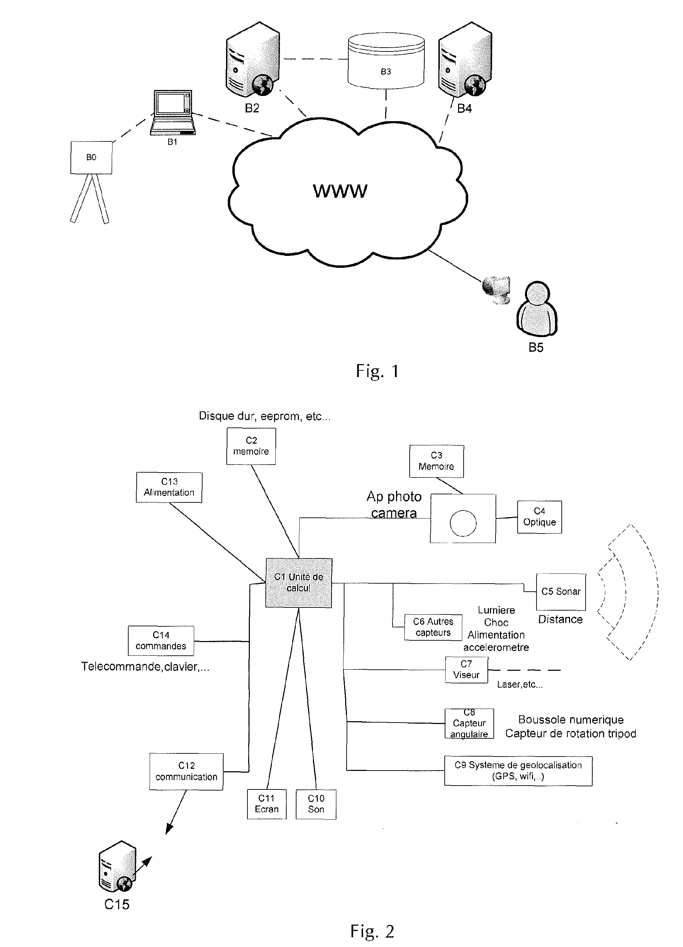

Un système de construction et de rendu de visites virtuelles, tel que montré sur la figure 1, permet à un utilisateur de voir sur un terminal B5 tel qu'un ordinateur connecté à Internet des images d'un lieu de visite selon différentes stations. Le système comporte un appareil de prise de vue B0, un ordinateur de transfert B1 apte à être connecté au réseau Internet (WWW), un serveur de traitement B2 connecté à Internet et à un serveur de base de données B3, et un serveur de services Internet B4.

L'ordinateur de transfert B1 est équipé d'un logiciel dédié. Un opérateur connecte l'appareil de prise de vue B0 à l'ordinateur de transfert B1 après une séance d'acquisition de données afin de récupérer les informations stockées par l'appareil de prise de vue B0, telles que des angles, des distances, des types de pièces et de liens et des prises de vue. L'ordinateur B1 ne sert que de passerelle et envoie directement les données sans traitement au serveur de traitement B2, par l'appel de méthodes web classiques telles que par exemple l'utilisation de Windows Communication Foundation, ou l'utilisation de FTP par exemple (File transfer protocol).

Le serveur de traitement B2 récupère donc les données et les images. Il analyse les données, et stocke les informations, les images de prise de vue et les chemins vers les images dans la base de données B3. Celle-ci est représentée distincte du serveur B2, mais elle pourrait y être intégrée. Le serveur de traitement B2 est programmé pour traiter les données et générer un produit multimédia. Le produit multimédia peut éventuellement être complété par des informations complémentaires telles que des descriptifs du lieu de la visite virtuelle et des différentes stations, par l'intermédiaire d'une interface utilisable par l'opérateur. Le produit multimédia peut prendre la forme d'une application Java exécutable sur le serveur de services B4 ou sur le terminal B5, ou d'une animation Flash (marque déposée). D'autres technologies pourraient aussi être utilisées.

Le serveur de services Internet B4 reçoit le produit multimédia produit par le serveur de traitement B2, le stocke et le restitue au terminal B5 à la demande de l'utilisateur du terminal. Le terminal B5 est programmé avec un navigateur Internet apte à afficher sur l'écran du terminal B5 le produit multimédia, en interaction avec des actions de l'utilisateur par l'intermédiaire d'un clavier, d'une souris ou de tout autre dispositif d'interface adapté.

Dans une variante, l'appareil de prise de vue B0 comporte un système de télécommunication pour communiquer directement de n'importe où avec le serveur de traitement B2, par exemple par les techniques GPRS ou UMTS.

Dans une variante, non représentée, la visite pourrait être générée directement sur l'appareil de prise de vue B0. Dans ce cas, la visite générée serait envoyée directement au serveur de services Internet B4 pour publication.

L'appareil de prise de vue B0 conforme à l'invention est montré de manière schématique sur la figure 2. Il comporte un appareil photographique numérique apte à prendre des photos panoramiques, relié à une unité de commande C1. L'appareil photographique comporte un dispositif optique C4 et une mémoire C3 pour stocker les photographies prises. L'unité de commande C1 reçoit de l'énergie par une alimentation C13. Elle est également connectée à une mémoire C2 pour stocker en particulier des données acquises, une interface de saisie C14 pour recevoir des commandes de l'opérateur, un écran C11 pour restituer des informations à l'opérateur, une interface de communication C12, un dispositif de visée C7 et un capteur angulaire C8. Optionnellement, l'appareil peut être complété par un télémètre C5, un capteur de localisation géographique C9 ou d'autres capteurs C6 tels qu'un capteur d'intensité lumineuse, un capteur de choc, un accéléromètre ou un voltmètre connecté sur l'alimentation.

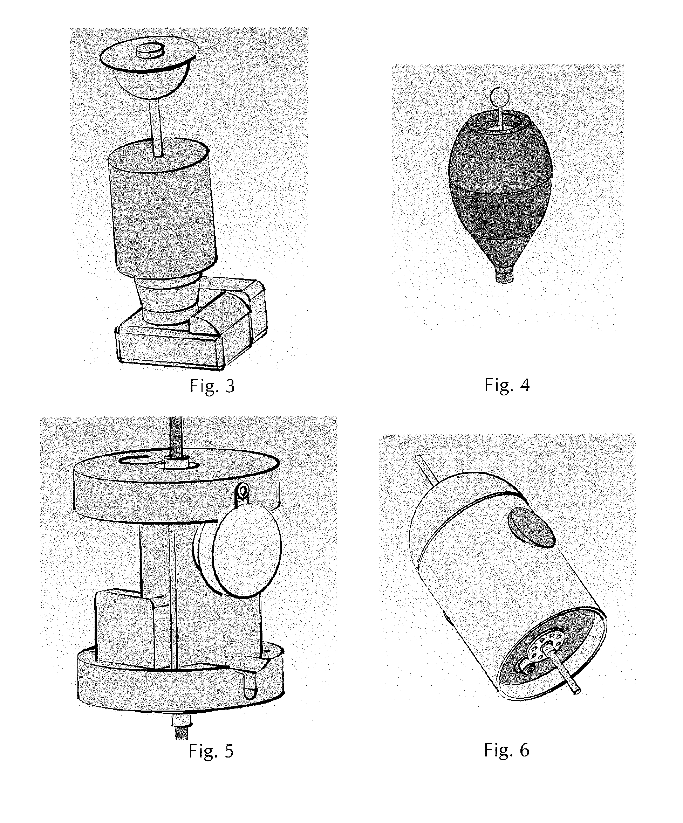

De préférence, l'appareil photographique permet de prendre un panorama en un seul cliché. L'appareil selon l'invention utilise un appareil d'un type déjà connu, comme un appareil avec un objectif à miroir axial tel que représenté schématiquement sur la figure 3 ou décrit dans le brevet US 6 459 451, ou avec un miroir comme représenté sur la figure 4.

Cependant, d'autres types d'appareil photographique conviennent comme ceux représentés aux figures 5 et 6, où un objectif est monté rotatif autour d'un arbre vertical afin de balayer tout un panorama par une rotation complète.

Les clichés pris sont stockés dans la mémoire C3 de l'appareil photographique.

L'unité de commande C1 comporte de manière classique un microprocesseur doté d'une mémoire de programme et de la mémoire de données C2. La mémoire de programme stocke des instructions pour mettre en oeuvre le procédé de fonctionnement de l'appareil. L'unité de commande C1 comporte aussi les interfaces nécessaires pour communiquer avec les éléments auxquels elle est reliée.

L'interface de saisie C14 peut être un simple clavier, une télécommande ou un écran tactile. Elle permet de recevoir des ordres de validation ou de sélection de la part de l'opérateur, qui sont interprétés par l'unité de commande C1 en fonction de l'état de l'appareil de prise de vue B0.

L'écran C11 est apte à afficher du texte et éventuellement des images ou des icones. Il présente ainsi des informations à l'opérateur ou permet d'afficher des questions ou des instructions à l'opérateur. Un écran à cristaux liquides est parfaitement adapté à cet usage. L'écran peut aussi être tactile, en combinant ainsi les fonctions de l'écran C11 et de l'interface de saisie C14.

L'interface de communication C12 permet de communiquer avec un autre appareil tel qu'un ordinateur ou un média de stockage. Elle peut être du type filaire, telle qu'une interface RS-232, USB, Ethernet ou IEEE 1394, du type parallèle ou du type sans fil telle qu'une liaison par infrarouge, ou par onde radio (Bluetooth, WiFi, GPRS ou UMTS).

Le dispositif de visée C7 permet de mesurer un angle d'azimut, c'est-à-dire un angle entre une direction de référence, liée à l'appareil, et une direction visée vers un repère. C'est par exemple un goniomètre avec lecture manuelle. Dans ce cas, l'interface de saisie C14 permet à l'opérateur de saisir la mesure lue sur le goniomètre après avoir visé une direction particulière avec le goniomètre. Le goniomètre peut être électronique, c'est-à-dire qu'il comporte un capteur électronique tel qu'un potentiomètre ou un codeur optique. Dans ce cas, l'information issue du capteur est acquise automatiquement par l'unité de commande C1. Enfin, dans un autre mode de réalisation, l'orientation d'un repère peut être désignée directement sur un écran tactile qui affiche une image simple ou panoramique de l'endroit où se situe l'appareil. Dans un autre mode de réalisation, la partie mobile du goniomètre est motorisée par un moteur pas-à-pas qui permet de piloter, et donc de connaître, la position absolue du goniomètre. L'opérateur pilote le moteur pour viser le repère et signifier par l'interface de saisie C14 que la position est atteinte.

Le capteur angulaire C8 a pour fonction de donner une référence « absolue » de l'orientation d'un lieu. Cette information est donnée typiquement par une boussole. Celle-ci peut être à lecture manuelle, auquel cas la lecture manuelle doit être saisie par l'opérateur, ou électronique, auquel cas la lecture est réalisée par l'unité de commande C1. Cependant, il est possible également de considérer que l'opérateur donne lui-même une indication de la direction de référence. En effet, dans un lieu intérieur avec une géométrie simple, il est possible de prendre l'orientation d'un mur comme référence. Dans ce cas, l'opérateur peut utiliser le dispositif de visée C7 pour indiquer la direction de référence pour chaque prise de vue.

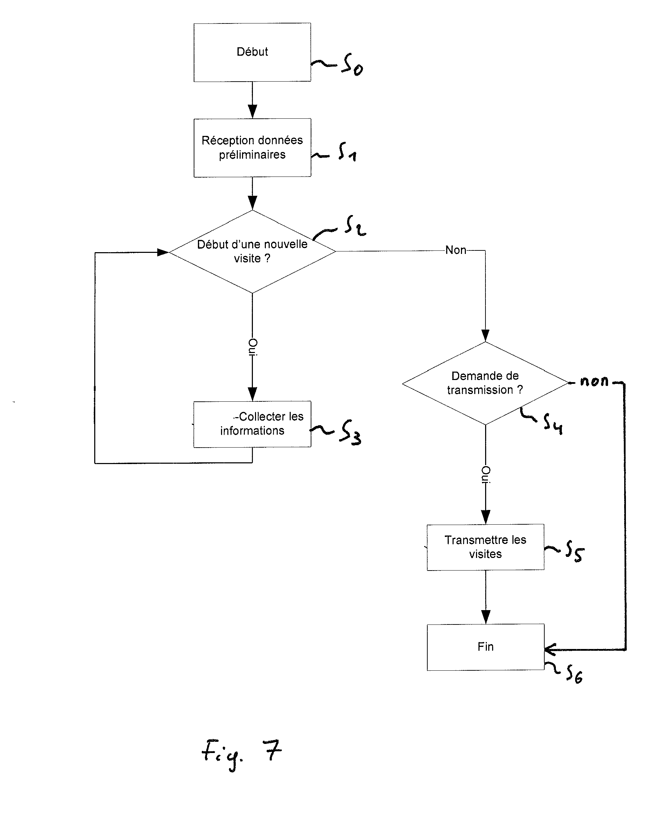

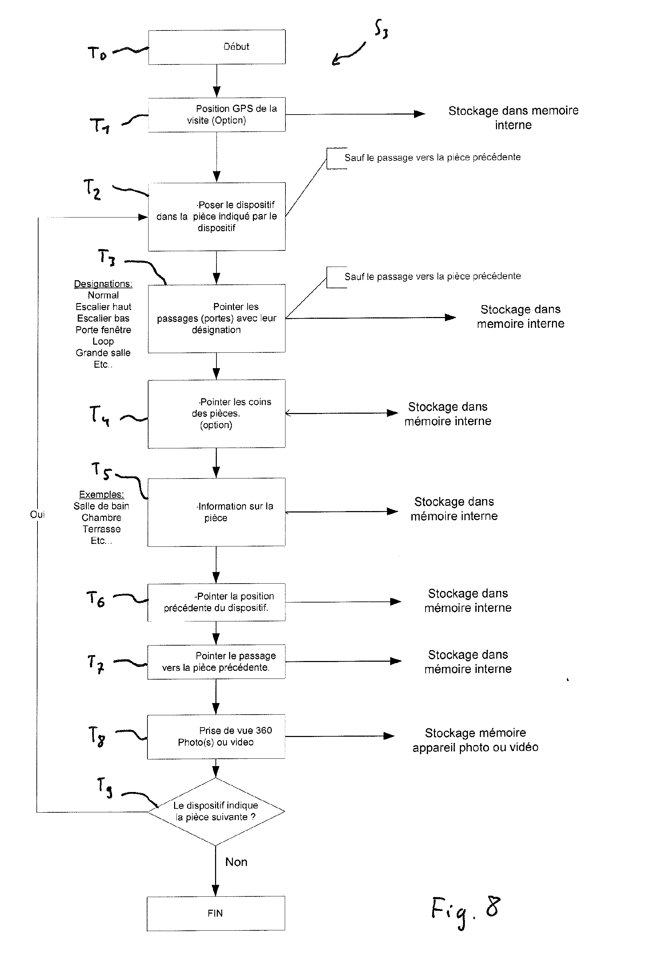

L'appareil de prise de vue B0 selon l'invention est programmé pour mettre en oeuvre un procédé selon l'invention dont les étapes vont être décrites maintenant en lien avec les figures 7 et 8.

Après une étape d'initialisation S0 de l'appareil de prise de vue B0, celui-ci s'apprête à recevoir des informations préliminaires à l'étape S1. Des informations d'ordre général sont donc acquises, comme le nom du propriétaire du lieu à visiter, l'adresse du lieu, la date et l'heure de la visite, une adresse mail , un numéro de téléphone, une carte localisant le lieu à visiter, etc. Ces informations peuvent être stockées à la main par l'interface de saisie C14 ou téléchargées dans la mémoire C3 de l'appareil de prise de vue B0.

A l'étape S2, l'appareil C0 demande si une nouvelle visite commence. L'opérateur répond par l'intermédiaire de l'interface de saisie C14. Si oui, l'appareil C0 présente à l'opérateur une liste de visites, représentées par exemple par leur adresse, et/ou le nom du propriétaire. Puis l'appareil C0 commence le processus S3 de collecte d'information tel que décrit en lien avec la figure 8. A la fin de ce processus S3, l'appareil C0 retourne à l'étape S2 et demande à nouveau si une nouvelle visite commence. En cas de réponse négative, l'appareil C0 demande à l'étape S4 s'il faut transmettre les données acquises. Les données sont transmises lors de l'étape S5 le cas échéant, puis le programme de l'appareil C0 est arrêté à l'étape S6.

Le détail du processus S3 de collecte des informations est décrit en lien avec la figure 8. La visite commence à l'étape T1 par l'enregistrement en mémoire de la position fournie par un éventuel système de localisation géographique par satellites, comme par exemple un GPS embarqué par l'appareil C0, ou simplement indiquée par l'opérateur par une lecture sur une carte.

Ensuite, à l'étape T2, l'appareil C0 demande de le positionner à une première station. L'opérateur positionne l'appareil C0 à l'endroit où la première prise de vue est souhaitée. L'appareil C0 peut indiquer sur l'écran C11 quelles sont les conditions de prises de vue (luminosité) de la position courante afin que l'opérateur puisse procéder à un réglage optimal du système. Equipé de capteurs photoélectriques, l'appareil C0 peut indiquer si la prise de vue nécessite l'utilisation d'un flash pour éviter une sous-exposition. L'opérateur procède aussi si nécessaire à un réglage de la hauteur de l'appareil C0. Enfin, l'appareil C0 fait l'acquisition d'une direction de référence grâce à la boussole numérique intégrée C8. Dans le cas où la direction de référence est indiquée par l'opérateur, l'appareil C0 demande à l'opérateur d'effectuer la mesure. L'opérateur procède au réglage du dispositif de visée C7 en le pointant dans une direction qu'il pourra répéter à chaque station, puis effectue une validation par l'interface de saisie C14.

A l'étape T3, l'appareil C0 demande de pointer la direction des passages entre les stations de la visite. L'opérateur utilise dispositif de visée C7 puis valide la position. L'appareil C0 enregistre dans la mémoire C2 un repère de liaison avec la direction désignée par le dispositif de visée C7. L'appareil C0 propose une liste de qualification du passage qui comprend les éléments suivants : une porte, une salle, un escalier montant, un escalier descendant ou un retour. L'opérateur choisit l'une de ces qualifications.

A l'étape T4, l'opérateur indique qu'il souhaite maintenant indiquer la direction de coins de la pièce. Il utilise de la même manière que précédemment le dispositif de visée C7 vers lesdits coins et valide le pointage pour que l'appareil C0 enregistre dans la mémoire C2 la direction indiquée. Dans le cas où l'appareil C0 de prise de vue B0 comporte un télémètre, la mesure de distance est enregistrée également en association avec la mesure de position du coin.

A l'étape T5, l'opérateur peut identifier, par l'interface de saisie C14, la qualification de la pièce visitée par un type de pièce (cuisine, salon, entrée, chambre...) de façon à ce que cette information soit stockée dans la mémoire de l'appareil. L'information peut aussi être un commentaire vocal enregistré par l'intermédiaire d'un microphone. Cette information n'est pas indispensable à la génération automatique de la visite, mais permet d'obtenir plus d'informations et de générer un rendu plus agréable par la suite, par un rendu codé en couleur, en forme ou en image en fonction de cette qualification. Cette étape peut aussi être effectuée manuellement après la collecte des données et peut être complétée et/ou mise à jour plus tard par l'opérateur ou par le propriétaire du lieu visité une fois la visite publiée.

A l'étape T6, l'appareil B0 invite l'opérateur à pointer la position de la station précédente. Le pointage est éventuellement réalisé au jugé, car la position précédente peut être masquée par un obstacle. Cette étape est omise pour la première station.

A l'étape T7, l'appareil B0 invite l'opérateur à pointer la position du passage vers la station précédente. Lorsque la présente station a été indiquée comme étant dans la même pièce que la station précédente, cette étape est omise, car la donnée est la même que celle acquise à l'étape T6.

A l'étape T8, l'appareil B0 invite l'opérateur à effectuer la prise de vue. Après le déclenchement de l'ordre de prise de vue, une temporisation est activée afin de permettre à l'opérateur de quitter la pièce pour ne pas apparaître sur la photographie panoramique. La photographie est stockée dans la mémoire C3 de l'appareil photographique ou dans une mémoire séparée.

A l'étape T9, l'appareil B0 détermine par lui-même, en fonction des données acquises précédemment, s'il reste des stations pour lesquelles les données ne sont pas encore acquises. Si tel est le cas, l'appareil B0 reprend le processus à l'étape T2 en invitant l'opérateur à placer l'appareil B0 à une station que ce dernier détermine. Pour indiquer cette station, l'appareil B0 indique par exemple une direction que le dispositif de visée C7 indiquera après un réglage sur cette direction. Une autre indication peut être fournie par un signal sonore ou lumineux émis par l'appareil B0 lorsque l'opérateur aura tourné le dispositif de visée C7 à proximité de la position désignant la direction de la prochaine station. Dans une variante, l'appareil B0 construit une représentation graphique en plan des lieux déjà visités et affiche ce plan avec un signal spécifique pour désigner la prochaine station. Dans une autre variante encore, l'appareil B0 affiche la vue panoramique qui vient d'être prise et désigne sur cette image la direction de la prochaine station. Lorsqu'aucune station ne reste à enregistrer, l'appareil B0 quitte le processus S3 et revient à l'étape S2.

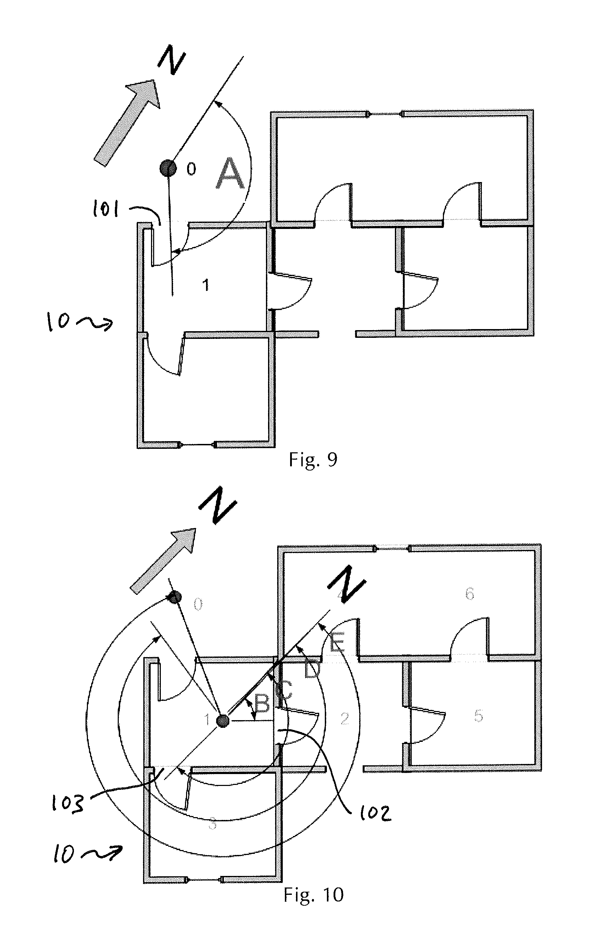

Le processus S3 de collecte des données va être détaillé en lien avec un exemple de visite décrit ci-après et avec les figures 9 à 15.

La figure 9 représente une maison 10 dite de plain-pied vue en plan et composée de 5 pièces. On prévoit pour cette visite une station devant la porte d'entrée 101, une station par pièce sauf pour une grande pièce pour laquelle on en prévoit deux.

L'opérateur installe l'appareil devant la porte d'entrée 101. L'appareil B0 enregistre la direction de référence, en l'occurrence la direction du nord magnétique repérée par la flèche N sur la figure 9. Il pointe la porte d'entrée avec le dispositif de visée C7 et valide la mesure. L'appareil enregistre l'angle A par rapport à la référence N, par la différence entre la mesure du dispositif de visée C7 et celle de la boussole C8. Il renseigne le type de pièce, c'est par exemple un pas de porte.

Le tableau 1 représente une partie du contenu de la mémoire C3 correspondant aux données enregistrées de la visite. Une première colonne représente la liste des stations auxquelles des données ont été collectées, avec un numéro d'identifiant attribué par l'appareil B0, et la qualification donnée par l'opérateur. La deuxième colonne représente une liste de liens complétés. La troisième colonne représente une liste de repères de liaison.

A l'issue de la collecte des données à la station 0, le contenu de la mémoire est le suivant :

**Tableau 1.**

| **Stations enregistrées** | **Liens complétés** | **Repère de liaison** |
|---|---|---|
| 0-pas de porte | | 0-1 A |

Après la prise de vue, l'opérateur valide l'étape. La mémoire contient un repère de liaison, en provenance de la station 0 vers une future station 1, avec une direction définie par l'angle A.

L'appareil B0 indique ensuite à l'opérateur la prochaine station grâce à sa mémoire de repères de liaison, à savoir la station 1 avec une orientation donnée par l'angle A. L'appareil donne une indication à l'opérateur sur cette direction à prendre, comme indiqué précédemment.

L'opérateur installe l'appareil dans la pièce 1, comme indiqué sur la figure 10. Il pointe successivement les deux portes 102, 103 permettant de sortir de la pièce, avec une qualification de type « porte » pour chacun de ces repères de liaison, et des angles respectivement B et C. L'appareil B0 numérote 2 et 3 les deux prochaines stations correspondantes. Puis l'opérateur renseigne le type de pièce, par exemple une cuisine. Enfin, l'opérateur pointe le pas de porte 101 du passage précèdent pour enregistrer un repère de provenance pour lequel un angle D est mesuré et enregistré. L'opérateur vise ensuite la station précédente 0 de l'appareil B0 et enregistre un angle de station E. Cette étape est optionnelle, mais donnera une meilleure approximation sur le rendu du plan représentatif de la visite, comme on le verra mieux par la suite. L'appareil B0 connaît ainsi tous les angles pour le passage de 0 vers 1 et va enregistrer dans sa mémoire un lien associant le repère de liaison et le repère de provenance, tel qu'il apparaît dans la deuxième colonne du tableau 2.

**Tableau 2.**

| **Stations enregistrées** | **Liens complétés** | **Repère de liaison** |
|---|---|---|
| 0-pas de porte | 0-1 A- D - E | |
| 1-Cuisine | | 1-2 B |
| | | 1-3 C |

Le lien complété signifie :
- Lien des stations 0 vers 1 avec un angle A
- Lien des stations 1 vers 0 avec un angle D
- Orientation entre les 2 stations d'un angle de station E de 1 vers 0.

Les informations du repère de liaison de la station 0 vers la station 1 dans la mémoire temporaire sont supprimées, ce qui est symbolisé dans le tableau 2 par une écriture barrée dans la troisième colonne.

Après la prise de vue, l'appareil B0 indique à l'opérateur la prochaine station grâce à sa mémoire de repères de liaison. Il parcourt sa mémoire C2 et sélectionne le premier repère de liaison ayant pour origine la station 1 actuelle : ici il trouve le repère de liaison 1-2, et indique en conséquence à l'opérateur d'aller vers la porte 102 vers la station 2.

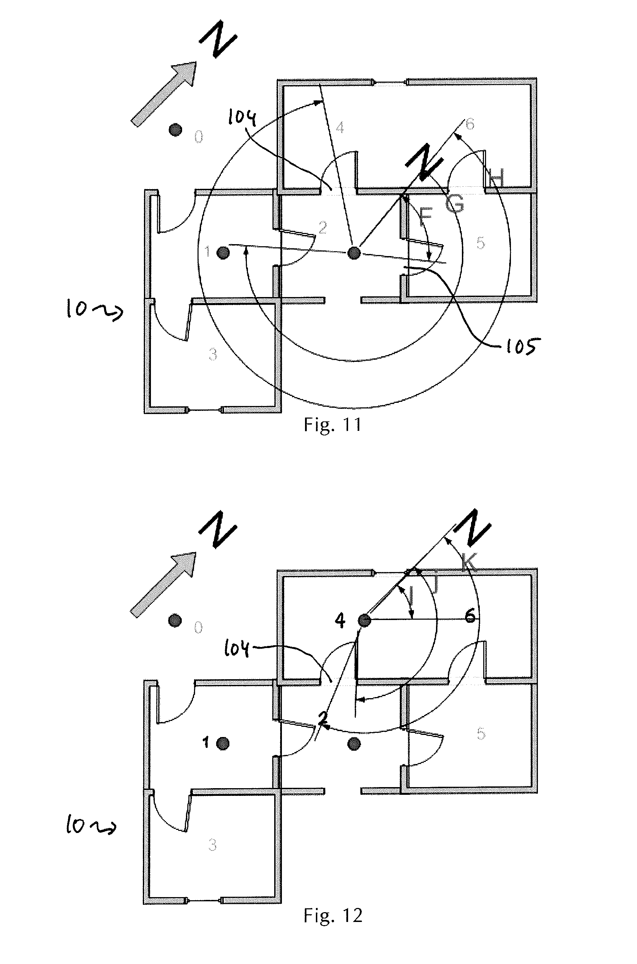

L'opérateur installe l'appareil B0 dans la pièce contenant la station 2, comme montré sur la figure 11. De la même manière que précédemment, l'opérateur pointe deux portes 104, 105 de la pièce vers deux prochaines stations 4 et 5 aux angles respectivement H et F. Il renseigne le type de pièce, par exemple un salon. Puis, il désigne la porte 102 du passage précèdent qui correspond à un angle G, ainsi que la position précédente de l'appareil, qui donne en l'occurrence un angle de station G identique. L'appareil B0 connaît ainsi tous les angles pour le lien de la station 1 vers la station 2 et va les enregistrer dans sa mémoire. Les informations résultantes telles que mémorisées sont représentées dans le tableau 3.

**Tableau 3.**

| **Stations enregistrées** | **Liens complétés** | **Repères de liaison** |
|---|---|---|
| 0-pas de porte | 0-1 A- D - E | |
| 1-Cuisine | 1-2 B-G-G | |
| 2-Salon | | 1-3 C |
| | | 2-4 H |
| | | 2-5 F |

Après la prise de vue, l'appareil B0 indique ensuite à l'opérateur la prochaine station grâce à sa mémoire de repères de liaison. Il parcourt la mémoire et sélectionne le premier lien inexploré à partir de la station 2 : c'est la station 4 avec un angle H et indique à l'opérateur la direction vers la station 4.

L'opérateur installe l'appareil B0 à la station 4 comme montré sur la figure 12 et renseigne le type de pièce, par exemple un type « divers ». L'opérateur veut faire deux stations dans la même pièce. Il indique donc la direction dans laquelle se situera la prochaine station et mesure l'angle I et indique que le repère de liaison est une salle. Il pointe aussi la porte 104 du passage précèdent et détermine ainsi un angle K pour un repère de provenance, ainsi que la position précédente de l'appareil B0, pour déterminer un angle de station J. L'appareil B0 connaît ainsi tous les angles pour le lien de la station 2 vers la station 4 et les enregistre dans sa mémoire. Les informations résultantes telles que mémorisées sont représentées dans le tableau 4.

**Tableau 4**

| **Stations enregistrées** | **Liens complétés** | **Repère de liaison** |
|---|---|---|
| 0-pas de porte | 0-1 A- D - E | |
| 1-Cuisine | 1-2 B-G-G | |
| 2 Salon | 2-4 H-K-J | 1-3 C |
| 4-Divers | | |
| | | 2-5 F |
| | | 4-6 I |

Après la prise de vue, l'opérateur valide l'étape de la station 4. L'appareil B0 indique ensuite à l'opérateur la prochaine station en parcourant sa mémoire de repères de liaison et en sélectionnant le premier lien inexploré de la station 4 : ici c'est la station 6 dans la direction de l'angle I.

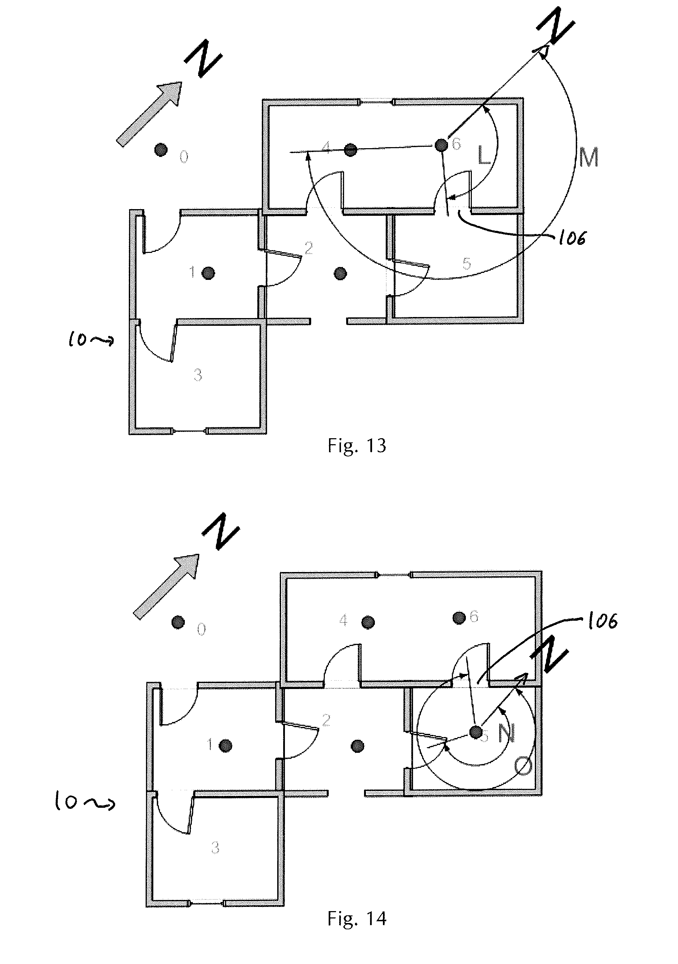

L'opérateur installe l'appareil B0 à la station 6 comme montré sur la figure 13 et renseigne le type de station, par exemple un type divers, soit le même type que la station 4. Il pointe la porte 106 dans la direction d'un angle L. Il pointe aussi la station 4 précédente pour un repère de provenance et détermine un angle M. L'appareil B0 connaît ainsi tous les angles pour le lien de la station 4 vers la station 6 et les enregistre dans sa mémoire. Comme le repère de liaison précédent indiquait une salle, il n'est pas utile de désigner un angle de station pour la position de la station précédente 4. Les informations résultantes telles que mémorisées sont représentées dans le tableau 5. On constate que le dernier repère de liaison enregistré indique un lien entre la station 6 et une station 7 qui sera en réalité la station 5. Cependant, aucune information n'a encore être fournie à l'appareil B0 sur ce point.

**Tableau 5**

| **Stations enregistrées** | **Liens complétés** | **Repère de liaison** |
|---|---|---|
| 0-pas de porte | 0-1 A- D - E | |
| 1-Cuisine | 1-2 B-G-G | |
| 2 Salon | 2-4 H-K-J | 1-3 C |
| 4-Divers | 4-6 I-M-M | |
| 6-Divers | | 2-5 F |
| | | |
| | | 6-7 L |

Après la prise de vue, l'appareil B0 indique la station 7. L'opérateur installe l'appareil B0 à la station 5 comme montré sur la figure 14 et renseigne le type de station, par exemple un type divers. Il pointe la porte 105 dans la direction d'un angle N et indique avec l'interface de saisie C14 que ce repère de liaison est de type retour, et que ce retour est vers la station 2. L'appareil B0 en déduit que ce repère de liaison est associé avec le repère de liaison de la station 2 vers la station 5, et que la station actuelle est la station 5. L'appareil B0 connaît ainsi tous les angles pour le lien de la station 2 vers la station 5 et les enregistre dans sa mémoire. L'opérateur pointe aussi la porte 106 pour un repère de provenance et détermine un angle O. L'appareil B0 connaît ainsi tous les angles pour le lien de la station 6 vers la station 5 et les enregistre dans sa mémoire. Les informations résultantes telles que mémorisées sont représentées dans le tableau 6.

**Tableau 6**

| **Stations enregistrées** | **Liens complétés** | **Repère de liaison** |
|---|---|---|
| 0-pas de porte | 0-1 A- D - E | |
| 1-Cuisine | 1-2 B-G-G | |
| 2 Salon | 2-4 H-K-J | 1-3 C |
| 4-Divers | 4-6 I-M-M | |
| 6-Divers | 6-5 L-O-O | |
| 5-Divers | 2-5 F-N-N | |
| | | |

Après la prise de vue à la station 5, l'appareil B0 indique ensuite à l'opérateur la prochaine pièce à visiter grâce à sa mémoire des repères de liaison. L'appareil B0 parcourt cette mémoire et cherche le premier repère de liaison de la station 5 actuelle : il ne trouve aucun repère de liaison correspondant à ce critère. Il continue alors à parcourir la mémoire de repères de liaison jusqu'à tomber sur le premier élément non traité (non rayé dans le tableau 6) : ici c'est le repère de la station 1 vers la station 3. L'appareil B0 indique à l'opérateur tout le chemin qu'il doit parcourir pour atteindre la station 3.

L'opérateur se rend donc à la station 3 et y installe l'appareil B0. L'opérateur pointe la porte 103 vers la station 1, ce qui détermine un angle P, et précise qu'il s'agit d'un repère de provenance. Il pointe également la position de la station 1 précédente, ce qui détermine un angle de station Q. Aucune autre sortie n'est à pointer. L'opérateur renseigne le type de pièce, par exemple une chambre. L'appareil B0 connaît ainsi tous les angles pour le lien de la station 1 vers la station 3 et va les enregistrer dans sa mémoire. Les informations résultantes telles que mémorisées sont représentées dans le tableau 7.

**Tableau 7**

| **Stations enregistrées** | **Liens complétés** | **Repère de liaison** |
|---|---|---|
| 0-pas de porte | 0-1 A- D - E | |
| 1-Cuisine | 1-2 B-G-G | |
| 2 Salon | 2-4 H-K-J | |
| 4-Divers | 4-6 I-M-M | |
| 6-Divers | 6-5 L-O-O | |
| 5-Divers | 2-5 F-N-N | |
| 3- Chambre | 1-3 C-P-Q | |

Comme à ce moment, après la prise de vue, il ne reste plus d'informations dans la colonne de repères de liaison, l'appareil B0 en déduit que la visite est terminée et il met fin au processus S3.

Les informations résultant de ce processus peuvent être stockées à titre d'exemple dans des fichiers au format XML. Un exemple minimaliste d'un tel fichier est donné en annexe 1.

L'ensemble des informations d'une visite est contenu entre des balises « VISITE ». Une donnée entre des balises « INDENTIFIANT » permet d'associer un repère d'identification à la visite. Le fichier contient aussi des informations concernant plusieurs liens, entre balises « LIEN », et plusieurs stations, entre balises « PIECE ». Chaque lien contient un identifiant entre balises « Lien », un type codé entre balises « Type », une station d'origine entre balises « Piece1 », une station de destination entre balises « Piece2 », un angle de repère de liaison « Angle1 », un angle de repère de provenance « Angle2 » et, optionnellement, un angle de station entre les balises « AngleDirect ».

Chaque station contient un identifiant entre les balises « Numero », un type entre les balises « Type », un repère d'image entre les balises « Image » et un angle de référence entre les balises « AnglePriseDeVue ». L'information de repère d'image provient par exemple de l'appareil photographique après chaque prise de vue.

Dans le cas où l'appareil de prise de vue B0 comporte un télémètre, pendant le processus S3 et pour chaque station, l'opérateur mesure un angle de coin et une distance de coin associée entre l'appareil de prise de vue B0 et un coin de la pièce où se trouve la station. Ces informations se retrouvent dans le fichier XML, entre les balises de la station correspondante, comme indiqué dans l'exemple de l'annexe 2, à l'intérieur des balises « COIN » sous la forme d'attributs « Id » pour un identifiant, « angle » pour la valeur de l'angle de coin, et « distance » pour la valeur de la distance de coin.

Une fois les données de la visite acquises, celles-ci sont transférées au serveur de traitement B2, comme indiqué plus haut. Ces données comportent par exemple le fichier XML décrit précédemment et l'ensemble des images correspondantes aux prises de vue. Les données de la visite sont marquées « à faire » pour être traitées plus tard.

Au moment du traitement, les images sont éventuellement traitées pour corriger d'éventuels effets d'optique liés à la nature de l'appareil photographique, ou en assemblant des images distinctes pour en faire une seule de type panoramique. Ces traitements sont connus en soi et ne sont pas détaillés ici.

Le traitement comporte aussi une étape de génération d'une ou de plusieurs images de parcours, vu en plan. Une image de parcours est générée pour chaque niveau. Un changement de niveau est déduit de l'enregistrement d'un repère de liaison de type escalier. L'image du parcours contient l'ensemble des liens entre les différentes stations. Le traitement comporte donc le passage en revue de chaque lien, le dessin d'un symbole pour chaque station, par exemple un cercle, et le traçage d'un trait de liaison correspondant à chaque lien et qui relie le symbole des stations correspondantes.

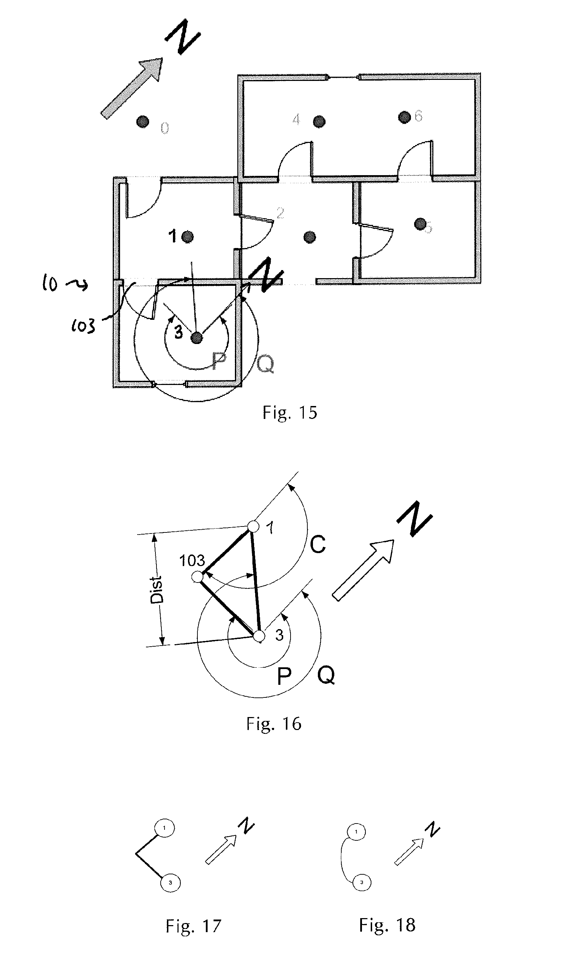

Par exemple, en se référant à la figure 16, on construit un triangle représentant la liaison entre la station 1 et la station 3. Le segment 3-1 est orienté selon la direction donnée par l'angle Q, le segment 1-103 vers la porte entre les stations 1 et 3 est orienté par l'angle C, et le segment 3-103 est orienté par l'angle P. La distance Dist entre les stations 1 et 3 est fixée de manière arbitraire. Ce paramètre va conditionner l'échelle de la représentation graphique. Le lien est alors représenté comme par exemple sur la figure 17 avec les deux segments 1-103 et 3-103, ou par une courbe dont les directions au départ des symboles sont celles des segments 1-103 et 3-103, comme représenté sur la figure 18.

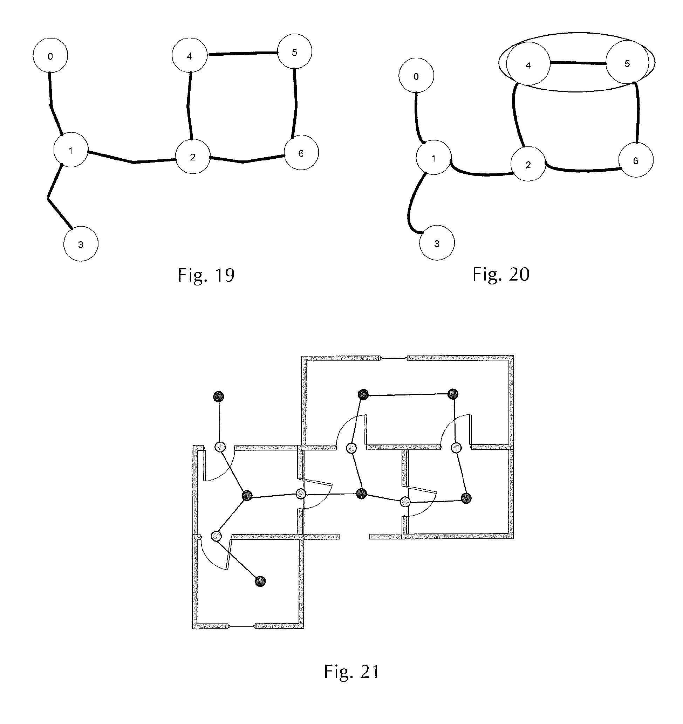

En associant l'ensemble des stations avec les liens qui les relient, on obtient une image de parcours comme sur la figure 19 ou sur la figure 20.

Selon une variante, l'étape de l'acquisition de l'angle de station T6 est omise. Dans ce cas, pour l'exemple ci-dessus, lors de la construction du triangle 3 - 1 - 103, on donne une même longueur aux segments 1 - 103 et 3 - 103.

La figure 21 montre un autre exemple d'image de parcours qui peut être reconstituée à partir des mesures d'angle et de distance de coins.

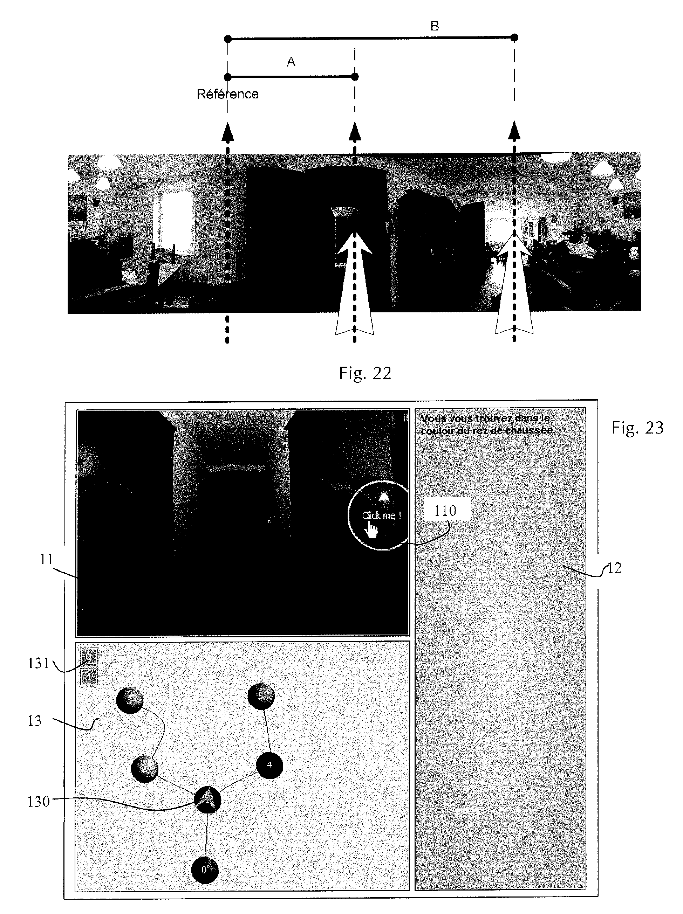

Le traitement comporte également une étape de placement de liens hypermédia sur l'image. En se référant à la figure 22, on place d'abord sur l'une des images panoramiques une référence selon l'indication de la référence d'orientation, donnée par la boussole. Cette référence se traduit par une distance à un bord de l'image. A partir de cette référence, on mesure les angles de repères de liaison ou de provenance et on place à mi-hauteur de l'image le lien hypermédia. Ce placement se traduit par des informations dans le produit multimédia et ne modifie pas l'image par elle-même. Ces informations permettront le rendu du lien hypermédia, tel que décrit ci-après.

Le traitement se termine par la génération du produit multimédia qui comporte une partie de programme et une partie de données. La répartition entre programme et données dépend de la technologie utilisée. La partie de programme est éventuellement parfaitement standard et seules les données sont spécifiques à la visite. L'ensemble du programme et des données est transféré sur le serveur de service Internet B4 où il permettra à un utilisateur de visualiser la visite virtuelle sur son terminal B5.

L'utilisateur obtient en particulier un écran comme montré sur la figure 23. L'écran comporte une zone de vue 11, dans laquelle l'image panoramique est visualisée, une zone de commentaires 12 dans laquelle des informations sur la visite sont données, et une zone de plan 13 dans laquelle une image de parcours est visualisée. L'utilisateur dispose d'une interface de pointage pour désigner un endroit particulier de l'écran et déclencher une action en lien avec l'endroit désigné.

La zone de plan 13 comporte le cas échéant une liste de choix 131 pour choisir le niveau à afficher dans la zone de plan 13. Une flèche 130 est représentée en surimpression sur le symbole de la station qui est visualisée dans la zone de vue 11. La flèche indique la direction correspondant à l'image affichée. Avec l'interface de pointage, l'opérateur peut désigner l'une des stations, et commander par une action sur le symbole telle qu'un « clic » l'affichage dans la zone de vue 11 de l'image prise depuis ladite station.

La zone de vue 11 contient l'une des images panoramiques telle que traitée par le serveur de traitement B2. L'image peut être affichée partiellement, et l'utilisateur dispose de moyens pour, grâce à l'interface de pointage, déplacer la partie visible de l'image panoramique. Lorsque l'utilisateur survole un lien hypermédia à l'aide de l'interface de pointage, un symbole tel qu'un cercle s'affiche afin d'indiquer qu'un lien hypermédia vers une autre station est accessible. Si l'opérateur actionne ce lien hypermédia, l'image de la station ainsi désignée s'affiche, et la flèche dans la zone de plan 13 s'affiche sur la station correspondante. Une animation visuelle peut éventuellement accompagner la transition d'une image à l'autre.

Dans un autre mode de réalisation, l'appareil de prise de vue est équipé pour acquérir des données de localisation géographique. A la place des mesures directes des angles, on mesure d'abord la localisation de la station, puis on place sur les passages d'une station à l'autre et on en déduit l'angle qui était mesuré directement dans le mode de réalisation décrit précédemment. On peut aussi calculer une distance avec la station et l'enregistrer.

Dans une variante non décrite, le produit multimédia est un programme complet qui peut être enregistré sur un support informatique tel qu'un disque magnétique ou optique et exécuté sur un ordinateur.

### Annexe 1

- <VISTE xmlns="http://www.demoinfostockees.com/visite.xsd"> <IDENTIFIANT>**1234**</IDENTIFIAT>
   - <LIEN>
      <Lien>**0**</Lien>
      <Type>**1**</Type>
      <Piece1>**0**</Piece 1>
      <Piece2>**1**</Piece2>
      <Angle1>**157**</Angle1>
      <Angle2>**337**</Angle2>
      <AngleDirect>**335**</AngleDirect>
      </LIEN>
   - <LIEN>
      <Lien>**1**</Lien>
      <Type>**1**</Type>
      <Piece1>**1**</Piece1>
      <Piece2>**2**</Piece2>
      <Angle1>**188**</Angle1>
      <Angle2>**250**</Angle2>
      <AngleDirect>**248**</AngleDirect>
      </LIEN>
   - <PIECE>
      <Numero>**0**</Numero>
      <Type>**2**</Type>
      <Image>**1234**</Image>
      <AnglePriseDeVue>**123**</AnglePriseDeVue>
      </PIECE>
   - <PIECE>
      <Numero>**1**</Numero>
      <Type>**1**</Type>
      <Image>**1235**</Image>
      <AnglePriseDeVue>**123**</AnglePriseDeVue>
      </PIECE>
   - <PIECE>
      <Mumero>**2**</Numero>
      <Type>**1**</Type>
      <Image>**1236**</Image>
      <AnglePriseDeVue>**123**</AnglePriseDeVue>
      </PIECE>
      </VISITE>
      </VISITE>

Annexe 2
<PIECE>
   <Numero>1</Numero>
   <Type>1</Type>
   <Image>1235</Image>
   <AnglePriseDeVue>123</AnglePriseDeVue>
   <COIN Id="0" type="0" angle="50" distance="2" />
   <COIN Id="1" type="1" angle="75" distance="1.5" />
   <COIN Id="2" type="0" angle="90" distance="2" />
   <COIN Id="3" type="0" angle="165" distance="2" />
   <COIN Id="4" type="0" angle="255" distance="2" />
   <COIN Id="5" type="0" angle="345" distance="2" />
   </PIECE>

## Revendications

1. Procédé d'acquisition de données en vue de la construction d'un produit multimédia de visite virtuelle, le produit multimédia comportant un parcours entre des stations, le parcours permettant de naviguer dans l'ensemble des stations lors de l'utilisation du produit multimédia, procédé selon lequel, avec un appareil de prise de vue (B0), on fait l'acquisition de données concernant des lieux dans au moins deux stations différentes de prise de vue, les données de chaque station comprenant au moins une image des lieux, un repère d'orientation lié à l'image, le procédé étant **caractérisé en ce que** les données de l'une des stations dite courante comportent en outre un repère de provenance vers l'une des stations dite précédente et/ou au moins un repère de liaison vers l'une des autres stations différente de la station précédente et de la station courante, les repères de liaison et de provenance étant des données de direction relatives au repère d'orientation de ladite station courante et destinées à construire le parcours du produit multimédia.

2. Procédé d'acquisition de données selon la revendication 1, selon lequel, après l'acquisition des données d'une station, l'appareil (B0) détermine et désigne une prochaine station en lien avec l'un des repères de liaison déjà acquis et enregistre un lien entre ledit repère de liaison et ladite prochaine station.

3. Procédé d'acquisition de données selon la revendication 2, selon lequel l'acquisition du repère de provenance pour désigner la station précédente est associée à la station dont les données ont été acquises juste précédemment.

4. Procédé d'acquisition de données selon la revendication 3, selon lequel l'acquisition du repère de provenance comporte en outre l'acquisition d'angle de station indiquant la direction vers la station précédente.

5. Procédé d'acquisition de données selon la revendication 1, selon lequel l'acquisition des repères de liaison comporte en outre l'acquisition d'une donnée de qualification du repère de liaison parmi une porte, pour désigner un passage entre deux pièces, une salle, pour désigner une autre station dans une même pièce, un escalier montant, pour désigner un passage vers un niveau supérieur, un escalier descendant pour désigner un passage vers un niveau inférieur, ou un retour pour désigner une station de laquelle les données ont déjà été acquises.

6. Procédé d'acquisition de données selon la revendication 1, **caractérisé en ce qu'**il comporte en outre l'acquisition de repères de coin pour désigner l'orientation de coins d'une pièce.

7. Procédé d'acquisition de données selon la revendication 6, dans lequel, pour chaque repère de coin, on acquiert en outre une mesure de distance entre l'appareil (B0) et le coin.

8. Procédé de construction d'un produit multimédia de visite virtuelle, **caractérisé en ce que** :
- on acquiert des données selon le procédé de l'une des revendications 1 à 7;
- on réalise automatiquement le produit multimédia en y intégrant les images acquises et en construisant un parcours entre les stations en fonction des repères de liaison et des repères de provenance acquis, le parcours permettant de naviguer dans l'ensemble des images lors de l'utilisation du produit multimédia.

9. Procédé selon la revendication 8, selon lequel, pour chaque repère de liaison ou repère de provenance, on place une zone de lien hypermédia sur l'image, centrée sur l'endroit désigné par le repère de liaison ou le repère de provenance.

10. Procédé selon la revendication 8, comprenant une étape de construction d'une image du parcours, l'image comportant des symboles représentant les stations et des traits représentant les liens entre les stations, les traits étant orientés, au départ du symbole, en fonction de l'orientation du repère de liaison ou du repère de provenance correspondant.

11. Procédé selon la revendication 10, comprenant une étape d'insertion d'un lien hypermédia sur le symbole représentant une station, pour que l'action sur ledit lien hypermédia provoque l'affichage de l'image liée à la station dans une zone de vue (11).

12. Appareil de prise de vue comportant des moyens d'acquisition de données concernant des lieux dans au moins deux stations différentes de prise de vue, les données de chaque station comprenant au moins une image des lieux, et des moyens d'orientation (C7) pour fournir un repère d'orientation pour chaque image, **caractérisé en ce qu'**il comporte en outre des moyens de chaînage (C8) pour enregistrer un repère de provenance entre l'une des stations dite courante vers l'une des autres stations dite précédente et/ou au moins un repère de liaison vers l'une des autres stations différente de la station précédente et de la station courante , le repère de liaison et le repère de provenance étant des données de direction relatives au repère d'orientation de ladite station courante et destinées à construire un parcours de produit multimédia.

13. Appareil selon la revendication 12, dans lequel les moyens de chaînage comportent un viseur (C8) monté mobile et apte à être orienté dans une direction, et un moyen de sélection pour enregistrer de manière sélective un repère de liaison ou un repère de provenance désigné par l'orientation du viseur (C8).

14. Appareil selon la revendication 12, dans lequel les moyens d'orientation sont une boussole (C7).

15. Appareil selon la revendication 12, **caractérisé en ce qu'**il comporte des moyens de désignation pour indiquer la prochaine station où des données sont à acquérir.

## Patentansprüche

1. Datenerfassungsverfahren zum Erstellen eines Multimediaprodukts zur virtuellen Besichtigung, wobei das Multimediaprodukt einen Verlauf zwischen Stationen umfasst, wobei es der Verlauf ermöglicht, bei der Verwendung des Multimediaprodukts in allen Stationen zu navigieren, wobei gemäß dem Verfahren mit einem Bildaufnahmegerät (B0) die Erfassung von Daten bezüglich Orten in mindestens zwei verschiedenen Bildaufnahmestationen erfolgt, wobei die Daten jeder Station mindestens ein Bild des Ortes und eine mit dem Bild verbundene Orientierungsmarke umfassen, wobei das Verfahren **dadurch gekennzeichnet ist, dass** die Daten einer der Stationen, der so genannten aktuellen Station, ferner eine Herkunftsmarke von einer der Stationen, der so genannten vorhergehenden Station, und/oder mindestens eine Verbindungsmarke mit einer der anderen Stationen, die anders als die vorhergehende Station und die aktuelle Station ist, aufweisen, wobei die Verbindungs- und Herkunftsmarken Richtungsdaten mit Bezug auf die Orientierungsmarke der aktuellen Station sind und dazu gedacht sind, den Verlauf des Multimediaprodukts zu erstellen.

2. Datenerfassungsverfahren nach Anspruch 1, wobei das Gerät (B0), nachdem die Daten einer Station erfasst wurden, eine nächste Station in Verbindung mit einer der bereits erfassten Verbindungsmarken bestimmt und bezeichnet und eine Verbindung zwischen der Verbindungsmarke und der nächsten Station aufzeichnet.

3. Datenerfassungsverfahren nach Anspruch 2, wobei die Erfassung der Herkunftsmarke zum Bezeichnen der vorhergehenden Station mit der Station verknüpft ist, deren Daten unmittelbar zuvor erfasst wurden.

4. Datenerfassungsverfahren nach Anspruch 3, wobei die Erfassung der Herkunftsmarke ferner die Erfassung eines Stationswinkels umfasst, der die Richtung zu der vorhergehenden Station angibt.

5. Datenerfassungsverfahren nach Anspruch 1, wobei die Erfassung der Verbindungsmarken ferner die Erfassung eines Datenelements zur Kennzeichnung der Verbindungsmarke als Tür, um einen Durchgang zwischen zwei Räumen zu bezeichnen, als Saal, um eine andere Station in demselben Raum zu bezeichnen, als aufsteigende Treppe, um einen Durchgang auf eine höhere Ebene zu bezeichnen, als absteigende Treppe, um einen Durchgang auf eine tiefere Ebene zu bezeichnen, oder als Rückkehr, um eine Station zu bezeichnen, deren Daten bereits erfasst wurden, umfasst.

6. Datenerfassungsverfahren nach Anspruch 1, **dadurch gekennzeichnet, dass** es ferner die Erfassung von Eckmarken umfasst, um die Orientierung der Ecken eines Raums zu bezeichnen.

7. Datenerfassungsverfahren nach Anspruch 6, wobei für jede Eckmarke ferner eine Abstandsmessung zwischen dem Gerät (B0) und der Ecke erfasst wird.

8. Verfahren zum Erstellen eines Multimediaprodukts zur virtuellen Besichtigung, **gekennzeichnet durch**:
- Erfassen von Daten wobei Verfahren nach einem der Ansprüche 1 bis 7;
- Automatisches Ausbilden des Multimediaprodukts **durch** Integrieren erfasster Bilder darin und Erstellen eines Verlaufs zwischen den Stationen in Abhängigkeit von den erfassten Verbindungsmarken und Herkunftsmarken, wobei es der Verlauf ermöglicht, bei der Verwendung des Multimediaprodukts in allen Bildern zu navigieren.

9. Verfahren nach Anspruch 8, wobei für jede Verbindungsmarke oder Herkunftsmarke ein Hypermedien-Verbindungsbereich zentriert um den Ort, der durch die Verbindungsmarke oder die Herkunftsmarke bezeichnet wird, in dem Bild angeordnet wird.

10. Verfahren nach Anspruch 8, umfassend einen Schritt des Erstellens eines Bildes des Verlaufs, wobei das Bild Symbole, welche die Stationen darstellen, und Linien, welche die Verbindungen zwischen den Stationen darstellen, umfasst, wobei die Linien ausgehend von dem Symbol in Abhängigkeit von der Orientierung der entsprechenden Verbindungsmarke oder Herkunftsmarke orientiert sind.

11. Verfahren nach Anspruch 10, umfassend einen Schritt des Einfügens einer Hypermedienverbindung an dem Symbol, das eine Station darstellt, so dass die Aktion an der Hypermedienverbindung bewirkt, dass das mit der Station verbundene Bild in einem Sichtbereich (11) angezeigt wird.

12. Bildaufnahmegerät, umfassend Mittel zum Erfassen von Daten bezüglich Orten in mindestens zwei verschiedenen Aufnahmestationen, wobei die Daten jeder Station mindestens ein Bild der Orte umfassen, und Orientierungsmittel (C7), um für jedes Bild eine Orientierungsmarke bereitzustellen, **dadurch gekennzeichnet, dass** es ferner Verkettungsmittel (C8) umfasst, um eine Herkunftsmarke zwischen einer der Stationen, der so genannten aktuellen Station, und einer der anderen Stationen, der so genannten vorhergehenden Station, und/oder mindestens eine Verbindungsmarke mit einer der anderen Stationen, die anders als die vorhergehende Station und die aktuelle Station ist, aufzuzeichnen, wobei die Verbindungsmarke und die Herkunftsmarke Richtungsmarken mit Bezug auf die Orientierungsmarke der aktuellen Station sind und zum Erstellen eines Multimediaproduktverlaufs gedacht sind.

13. Gerät nach Anspruch 12, wobei die Verkettungsmittel ein Visier (C8), das beweglich montiert ist und geeignet ist, um in einer Richtung orientiert zu sein, und ein Auswahlmittel zum selektiven Aufzeichnen einer Verbindungsmarke oder einer Herkunftsmarke, die durch die Orientierung des Visiers (C8) bezeichnet ist, umfassen.

14. Gerät nach Anspruch 12, wobei das Orientierungsmittel ein Kompass (C7) ist.

15. Gerät nach Anspruch 12, **dadurch gekennzeichnet, dass** es Bezeichnungsmittel umfasst, um die nächste Station anzugeben, an der Daten zu erfassen sind.

## Claims

1. A data acquisition method for establishing a virtual visit multimedia product, the multimedia product comprising a course among stations, the course allowing for navigation within all of the stations when using the multimedia product, wherein according to the method, data regarding locations in at least two different imaging stations is acquired with an imaging device (B0), with the data of each station including at least one image of the locations and an orientation mark linked to the image, the method being **characterized in that** the data of one of the stations, the so-called current one, further includes a mark of origin from one of the stations, the so-called preceding one, and/or at least one linkage mark to one of the other stations different from the preceding station and the current station, wherein the linkage mark and the mark of origin are directional data in relation to the orientation mark of said current station and intended for establishing the course of the multimedia product.

2. The data acquisition method according to claim 1, wherein, when the data of one station has been acquired, the device (B0) determines and designates a next station in connection with one of the linkage marks already acquired, and records a link between said linkage mark and said next station.

3. The data acquisition method according to claim 2, wherein acquisition of the mark of origin for designating the preceding station is associated with the station the data of which has been acquired immediately before.

4. The data acquisition method according to claim 3, wherein acquisition of the mark of origin further includes acquisition of a station angle indicating the direction towards the preceding station.

5. The data acquisition method according to claim 1, wherein acquisition of the linkage marks further includes acquisition of a data element qualifying the linkage mark among a door for designating a passage between two rooms, a hall for designating another station in the same room, an ascending stairway for designating a passage to a higher level, a descending stairway for designating a passage to a lower level, or a return for designating a station the data of which has already been acquired.

6. The data acquisition method according to claim 1, **characterized in** further including acquisition of corner marks to designate the orientation of the corners of a room.

7. The data acquisition method according to claim 6, wherein for each corner mark, furthermore a distance measurement between the device (B0) and the corner is acquired.

8. A method for establishing a virtual visit multimedia product data, **characterized by**:
- acquiring data according to the method of any of claims 1 to 7;
- automatically creating the multimedia product by integrating acquired images therein and establishing a course between the stations depending of the acquired linkage marks and marks of origin, wherein the course allows for navigation within all of the images when using the multimedia product.

9. The method according to claim 8, wherein for each linkage mark or mark of origin, a hypermedia link zone is placed in the image, centered on the location designated by the linkage mark or the mark of origin.

10. The method according to claim 8, including a step of establishing an image of the course, the image including symbols representing the stations and lines representing the links between the stations, the lines being oriented starting from the symbol depending on the orientation of the corresponding linkage mark or mark of origin.

11. The method according to claim 10, including a step of inserting a hypermedia link on the symbol representing a station so that the action on said hypermedia link causes the image linked to the station to be displayed in a viewing zone (11).

12. An imaging device, including means for acquiring data regarding locations in at least two different imaging stations, with the data of each station including at least one image of the locations, and orientation means (C7) for providing an orientation mark for each image, **characterized by** further including concatenation means (C8) for recording a mark of origin between one of the stations, the so-called current one, to one of the other stations, the so-called preceding one, and/or at least one linkage mark to one of the other stations different from the preceding station and the current station, wherein the linkage mark and the mark of origin are directional data in relation to the orientation mark of said current station and intended for establishing a multimedia product course.

13. The device according to claim 12, wherein the concatenation means include a viewfinder (C8) movably mounted and adapted to be oriented in one direction, and a selection means for selectively recording a linkage mark or a mark of origin designated by the orientation of the viewfinder (C8).

14. The device according to claim 12, wherein the orientation means is a compass (C7).

15. The device according to claim 12, **characterized by** including designating means for indicating the next station where data is to be acquired.
